# EUROPEAN PATENT SPECIFICATION

(11) **EP 3 226 681 B1**
(45) Date of publication and mention of the grant of the patent: **05.01.2022**
(21) Application number: 15864606.7
(22) Date of filing: 18.11.2015
(51) Int. Cl.: G07C 9/00, A01K 15/04, A01K 5/02, E06B 7/32, A01K 5/01

(54) **SYSTEM FOR PROVIDING PREIDENTIFIED PETS SELECTIVE ACCESS TO A PREDETERMINED LOCATION OR OBJECT**
SYSTEM FÜR DEN SELEKTIVEN ZUGANG VON BESTIMMTEN HAUSTIEREN ZU EINEM BESTIMMTEN ORT ODER OBJEKT
SYSTÈME POUR FOURNIR, À DES ANIMAUX DOMESTIQUES PRÉ-IDENTIFIÉS, UN ACCÈS SÉLECTIF À UN EMPLACEMENT OU À UN OBJET PRÉDÉTERMINÉ

(30) Priority: 02.12.2014 US 201414558065
(43) Date of publication of application: 11.10.2017
(73) Proprietor: Vet Innovations, Llc, New Hartford, CT 06057 (US)
(72) Inventor: JALBERT, David, Conventry, RI 02816 (US); EAKER, Diane, Blooming Prairie, MN 55917 (US)
(74) Representative: EIP
(86) International application number: PCT/US2015/061234
(87) International publication number: WO 2016/089596

(56) References cited:
- US-A- 4 247 806
- US-A1- 2001 045 512
- US-A1- 2004 020 100
- US-A1- 2005 274 463
- US-A1- 2009 115 366
- US-A1- 2012 073 200
- US-A1- 2012 186 525
- US-A1- 2012 186 525
- US-B2- 8 165 719
- None

## Description

### BACKGROUND OF THE INVENTION

The present invention relates generally to a system for providing pets with controlled access to various different locations and/or objects. More specifically, the present invention relates to an automated system whereby pets wearing an ID tag are allowed access to various locations and/or objects, for example food contained within a feeder dish, while a sensor system, responding to the presence of other animals or people, causes the device to close preventing unauthorized access thereto.

It should be noted by one skilled in the art that while the technology of the present invention is presented in the context of a preferred embodiment pet feeder dish such disclosure is meant only to be illustrative and is not intended to limit the scope of this invention to a particular configuration. It is also intended within the scope of the present invention that the system disclosed herein can be applied equally for controlling access to litter boxes, pet watering systems (including circulating and outside of the house non-circulating), pet toys, pet crates, pet gate access, pet doors, pet beds and pet containment systems. Accordingly, the general scope of the system is directed to the pet identification and access control technology and not to a specific embodiment. This provides a broad range of pet products that are improved in the context of the system of the present invention.

Generally portions of the technology disclosed herein has been discussed in the prior art only in the context of controlled access feeders. It is well known that some animals are restricted to certain diets for many reasons ranging from the type or breed of animal, the age of the animal, the animal's weight or even specific health issues, such as diabetes for example. However, it is often inconvenient based on the pet owner's schedule to accommodate the dietary needs of the animal. This is particularly true when the pet owner has more than one pet, each requiring different dietary needs. The net result is that feeding time can become an issue for not only the pet owner but also for the pet, leading to further aggravation of the above listed issues and the creation of new issues where none existed before. In addition, the presence of young children who may try to eat pet food poses yet a further problem for pet owners.

In an attempt to resolve these issues, there is a need for a pet feeding system that can be set to automatically recognize and operate for a specific pet including systems that deliver specific amounts of food according to whether the pets are on a diet, maintaining their weight or eating therapeutic foods. The feeders should prevent pet access to food other than the specific amount prescribed. In response there are various types of "automatic" animal feeding devices disclosed in the prior art. There are several devices that generally fall into a few distinct categories. One category of devices relies upon timer mechanisms that are programmed to operate on a 24-hour timetable. When a predetermined elapsed time or specific clock time is met, the device opens to allow the animal access to the food. These products generally have a cover that opens at the specific time set. The doors themselves in general open exterior to the device or require significant space to relocate into the feeder. Other devices simply depend on the pet to self-regulate its consumption of food and simply include a bulk storage device that automatically fills an exposed uncovered bowl.

Still other systems in the prior art control access to the food contained therein based on the presence of the pet at the feeding device. More particularly, as described in US Patent No. 5,570,655 (Targa); and US Patent Nos. 3,897,753 and 4,036,178 (Lee et al.), a complex control system is provided that generates an electric field around an open food receptacle. An animal wearing a special collar that is provided with a conductive portion to alter the electric field signals to the system when the proper animal approaches the device. In response to the signal from the proper animal, a shock or other signal-generating device is disabled thereby allowing the proper animal to access the dish. Should an animal not wearing the special collar reach over the lip of the dish and make contact with the metallic strip thereon, the animal receives a shock that frightens the animal away from the dish. These methods do not require a cover for the food and have not been commercialized. In another alternate embodiment, upon identifying the presence of the proper animal, the device activates a hopper that operates to fill a food receptacle. These devices operate with exposed food in the dish, which any determined pet can eat and therefore portion control is not achieved. In addition, this creates the risk that small children in the household will play with or eat the pet's food.

Similarly, US Patent No. 5,669,328 (Lanfranchi) provides a cone-shaped device that partially opens when a receiver positioned within the device receives a signal from a collar on a pet. Since only a small triangular opening is provided for feeding, it is possible that the animal will get its head stuck in the device making it unlikely that the proper animal would to want to return to such a device. This is similarly true for US Patent No. 7,458,336 (Eu) .

Still further, US Patent No. 7,395,782 (Lindsay) provides a segmented door that collapses into itself and opens to form a hemispherical cover over the bowl, but is large and external to the system and each panel uses the same hinge point so the door uses many different size panels in order to "collapse" into a relatively smaller space resulting in higher part and tooling cost. Further, during closing the door comes forwards and down on the pet's head should the pet not get out of the way.

US Patent No. 7,127,707 (Clarke) provides a linear door system driven by a rack of gears that is connected to the single piece door by means of a spring. A combination of the spring force and time are used to prevent a pet from getting stuck and or hurt by the door when it is closing. Monitoring the closing time or adding in a force sensor to determine the load on the door are disclosed as a means to solve this potential problem. Adding a force sensor for the door spring requires and extra system with cost and complexity. Time based closing is not a reliable method of understanding the presence of a pet trying to keep the door open as debris build up or wear will also affect the doors time of closing.

US Patent No. 6,044,795 (Matsuura et al.) shows an animal tag having a memory for storing a history of the animal feeding times. The device samples the tag every 10 minutes and, if the animal is present, dispenses food to a separate dish. As is the case with the other prior art discussed herein, the food is exposed once dispensed, making it available for other animals or children to access. This device also appears rather complicated, especially when it is considered that it can only feed one animal.

US Patent Nos. 7,228,816 and 7,426,901 (Turner et al.) discloses a pet feeding system that also operates based on identifying animals with tags, however, the system requires a complex system for moving the food bowl from inside the feeder to the outside. In addition, the feed system can easily trap the animal as it is closing should the pet try to keep it open.

US Patent No. 7895973 (Whelan) shows a feeder with similar pet identification technology, modes in order to provide and it also defines specific operational some level of control to the feeding patterns of the pets. The invention discloses how at initial use the feeder can monitor the amount an animal is present at the feeder for an initial period then calculate a targeted daily feeding time. Further, Whelan discloses operational modes such as limiting time per feeding to discourage over eating at any one meal, the user entering in a reduced food portion so as to put the animal on a diet, running the feeder open and only closing upon sensing an unauthorized animal, and excluding dogs from being fed at night when programmed by the owner. However, being a gravity feed device, the system can only control the amount of food by controlling any animals time at the feeder. The system therefore uses time as an indirect method of controlling the amount of food. Simple testing shows that the animals simply change their eating habits as a result of any attempted control by the system therefore invalidating the entire system.

US2012/186525 A1 discloses a system to control pet access to various locations or objects. A sensor system is employed to selectively permit access to the location or object. In some embodiments, the system comprises a compartment that is closed by a retractable door. US8165719 B2 discloses a system for electrically and automatically controlling pet doors. Monitoring the current of motors for controlling a pet door is used to detect obstructions. US2009/115366 A1 discloses a system for moving a barrier between limited positions, which gradually slows movement of the barrier when a soft obstacle is encountered.

In view of the prior art, there is a need for an automatic system that has a strong yet safe cover which has the capability to deliver controlled portions of food and uncovers food contained therein when the assigned pet approaches allowing the animal to eat the specific food the owner has placed in that feeder, while also recognizing all other animals in its proximity in order to cover the food or keep it covered when those animals or people approach. There is a further need for a system that safely covers the food while not disturbing the pet when the cover opens and closes controlled by an algorithm that sense if there is a blockage in the door and responds by pausing or reversing momentarily then resuming its progress in closing. In this way a pet trying to keep the door open will not be hurt, yet the door will continue to attempt to close and eventually do so by giving time for the pet to remove itself at intervals until the door has fully closed. Still further there is a need for a simplified pet feeding system that controls access by a plurality of animals to food, which can provide the correct food amount according to their dietary needs by means of one of several food delivery algorithms that deliver either a consistent daily food amount, small portions as needed for multiple feedings per day, especially with cats, and one or more food delivery protocols for maintaining and or reducing food amounts for periods of time that enable safe weight loss for overweight pets by providing less calories safely to the correct animal and is relatively less complex and cost-effective in regard to its use and operation.

Alternately there is a need for applying this access control and door technology to litter boxes where there is a need to prevent dogs and small children from getting into cat litter boxes. Litter boxes are, by nature, not a clean environment. The possibility that children or other household pets such as dogs may enter a litter box represents a health hazard to the children of families with cats. In addition, in multi pet households it is desired to have a litter box for each cat and certain cats can get territorial about their litter boxes. To date litter box prior art is limited to varying techniques for cleaning the litter boxes of clumped litter and other waste products, not to the health issues associated with this dirty environment and the free access all creatures have to these products. This invention can be utilized on either the simple covered litter box by adding the controlled access door and identification system or the door can be integrated directly into the rake system of the selfcleaning system where the two powered systems can be integrated into a single structure which is lower in complexity and cost than two separate systems.

Pet crate, gate access, pet doors, pet beds, and pet containment systems all are used to separate pets from each other in multi pet households, other animals outside of the home, or the pet owners and children. These systems can all be integrated with the proposed door system as it is easily integrated into these structures due to its ability to fit in tight spaces, store around corners and out of the way. The safety controls integrated into the system also make this system an improvement over the prior art. The extended range of detection in the 2-foot range enables the access doors of all these products to react in time to safely and reliably interact with the pets.

Still further there remains an alternate need to apply the identification and access control technology to pet watering systems including circulating and outside of the house non-circulating and pet toys. These products can all be significantly improved from the addition of this technology resulting in improved health and safety of both pets and family members for households with pets.

### BRIEF SUMMARY OF THE INVENTION

The present invention provides a system as claimed in claim 1. In this regard, the present invention provides a system that controls pet access to various different locations and/or objects in a safe durable and low-cost manner. More specifically, in a preferred embodiment, the present invention provides an automated system whereby identified pets are allowed controlled access to various locations and/or objects, such as food contained within a feeder dish for example, while a door structure and control system keeps the pet safe through the use of a door which is made up of several repeated panels which together move from the front and under the food bowl to over and to the back of the product upon closing and having a jam sensing system in order to protect pets from being caught in the closing door. Further it is an aspect of this invention that the same logic is used for controlling a food jam in the food delivery system. In yet another aspect of the present invention the product has an integrated door in the food delivery channel that is used to monitor the movement of food both during food delivery and when a pet is eating and in combination with sensors will cause the main door cover to close should a pet attempt to remove food from the food delivery channel. In a still further aspect of this invention the food delivery system is controlled by algorithms to aid in the proper delivery of food to the pet in several modes ranging from eating too fast, eating too much, eating throughout the day as best suites a dog/cat, and combinations of the above.

In one embodiment, the present invention is disclosed as a single bowl pet feeder. Generally, the feeder includes a body or housing that has a compartment and a door guide track therein and a food bowl located in the interior of the body. During normal operation the door in the guide track is closed thereby covering the food bowl making it inaccessible to either animals or small children. The feeder further includes one or more sensors on the top and/or front face for the identification of tagged animals, non-tagged animals or children. Preferably, the sensors function using RF technology, ultrasonic, infrared, visible spectrum light or combinations thereof to verify the presence of both approved and/or non-approved animal(s) in any combination in close proximity to the feeder. Approved and non-approved pets may be determined through comparison of the sensed signature to a signature or signatures established at system setup. Close proximity is defined as within 4 feet and preferably within 2 feet so that the feeder is only reacting to animals that are approaching the feeder and not just in the area such that the feeder does not react and open or close to an animal that is just passing by. The preferred embodiment utilizes this range in order to understand and react to approaching pets so that the feeder may either open to present the food to an authorized pet or more specifically close in a manner that is safe to an approved pet at the feeder, but before a non-approved pet can get to the feeder and acquire food targeted for the approved pet(s) only.

In operation, as a pet approaches the feeder, sensor(s) identify if the pet is authorized. If the pet is authorized or approved, the door opens or remains open to allow the pet access to the food contained therein. When the authorized pet departs, the door closes preventing access to the food. In contrast to the prior art, the present invention also may employ more than one sensor to determine the presence of other non-authorized animals or children. Should such a presence be detected (even when an authorized pet is accessing the feeder) the door is closed thereby preventing a non-authorized animal or child from accessing the food contemporaneously with the authorized pet. In addition, should a non-authorized tagged pet approach the feeder the sensors will pick up that and will close the door. The system may also operate in a mode where a single pet may be set up as non-authorized while all other pets are considered authorized. In this way a single product such as the feeder could support and or feed multiple animals while not allowing the single nonauthorized pet to gain access. This could be done by running the feeder or other product in one of two ways. (1) The door is always open and only closes when the nonauthorized pet is within the sensing range of the feeder, or (2) the feeder could remain closed, to keep the food from sight and open for all sensed pets and either not open or close when only the single non-authorized pet is detected.

In a further embodiment the feeder could have more than 1 food bin such that more than one food type could be stored in the product. These foods could be selectively delivered to more than one bowl. In this structure a feeder having food bowls on opposite sides or side by side but spaced apart could enable more than one animal to feed out of the feeder at the same time and having different food. In this instance the combination of sensors would identify not only which pets are present in the vicinity of the feeder, but which is at which food bowl and the feeder would allow access or not to each food bowl depending on the pre-programmed authorization or recognition of a tag and or biometric recognition including visual light-based digital signatures of authorized animals biometric features.

It is also within the scope of this invention that sensors alone be employed to identify the target animal as contrasted to the non-target pet or person. In this regard, the sensors will identify the visible, infrared or ultrasonic signature of the target animal and only operate when that signature is detected. The approved "signature" data of the one or more authorized pet is programmed into the feeder control at first set-up. Additional and/or non-matching signatures will cause device to close or not open when the product is approached. As was stated above this pet identification technology is also disclosed in an alternate embodiment in the context of litter boxes. Another embodiment discloses pet watering systems including circulating and outside of the house non-circulating watering dishes. Still a further embodiment depicts pet gate access, pet containment systems, pet doors and pet toys. All totalled, the pet identification and access control technology can be applied across a broad range of pet products.

It is therefore an object of the present invention to provide an automatic system that uncovers food contained therein when the approved pet approaches allowing the animal to eat the specific food the owner has placed in that feeder while also recognizing all other animals in its proximity in order to cover the food or keep it covered when those animals or people approach. It is a further object of the present invention to provide a system that excludes pets from one feeder while allowing access to yet another feeder so that they may be able to eat the food they require. It is still a further object of the present invention to provide a simplified pet feeding system that controls access by a plurality of animals to food, which can provide the correct food in the correct amount for specific feeding needs of pets safely to the correct animal and is relatively less complex and cost-effective in regard to its use and operation. It is yet a further object of the present invention to provide a system that provides selective control and access to other pet related items such as litter boxes, pet watering systems including circulating and outside of the house non-circulating, pet toys, pet crate and gate access, pet doors, pet beds, and pet containment systems.

These together with other objects of the invention, along with various features of novelty that characterize the invention, are pointed out with particularity in the claims annexed hereto and forming a part of this disclosure. For a better understanding of the invention, its operating advantages and the specific objects attained by its uses, reference should be had to the accompanying drawings and descriptive matter in which there is illustrated a preferred embodiment and specific additional embodiments of the invention.

### BRIEF DESCRIPTION OF THE DRAWINGS

In the drawings which illustrate the best mode presently contemplated for carrying out the present invention:
FIG. 1 is a front perspective view of a pet feeding dish in accordance with the teachings of the present invention;
FIG. 2 is a front, exploded perspective view of the pet feeding dish of Fig. 1;
FIG. 3 is a perspective view of the controlled access portion of the pet feeding dish of Fig. 1;
FIG. 4 is an exploded perspective view of the controlled access portion of Fig. 3;
FIGS. 5A, B and C are a representation of a slat constructed for use in forming the retractable access door;
FIGS. 6A, B and C include various views of an assembled access door;

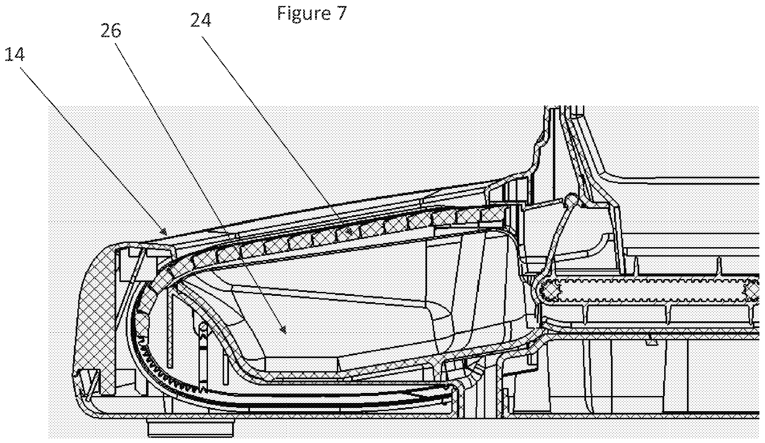

FIG. 7 is a cross-sectional view of the controlled access portion of the pet feeding dish of Fig. 1;
FIG. 8 is a detailed partial view of the drive system for opening and closing the access door;
FIGS. 9A, B and C show the operation of the food dispenser mechanism;
FIGS. 10A and B show a flowchart detailing the operational steps of the system;
FIG. 11 is an alternate cross-sectional view of the controlled access and food delivery portion of the pet feeding dish of Fig. 1;
FIGS. 12A, B and C depict different portions of the food delivery system including the drive mechanism;
FIG. 13 is a cutaway view of the interior food storage compartment;
FIG. 14 is a view of the bottom panel of the device;
FIG. 15 is an illustrative depiction of a control panel for the device;
FIG. 16 is a perspective view of an alternate embodiment of the present invention in the context of a pet door;
FIG. 17 is a perspective view of an alternate embodiment of the present invention in the context of a watering dish;
FIG. 18 is a perspective view of an alternate embodiment of the present invention in the context of a litter box;
FIGS. 19A, B and C depict a control door and cleaning mechanism for a litter box; and
FIGS. 20A and B depict the operator for the litter box cover access door.

### DETAILED DESCRIPTION OF THE INVENTION

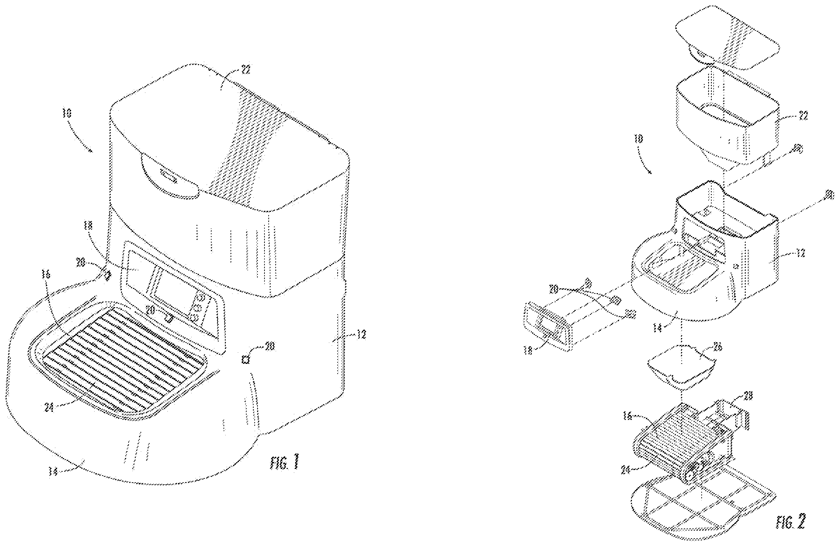

Now referring to the drawings, a system is provided that controls pet access to various different locations and/or objects and more specifically, in the preferred embodiment, as depicted at Figs. 1-4, provides an automated system whereby identified and authorized pets are allowed access to various locations and/or objects, such as food contained within a feeder dish for example. Nonauthorized pets cause the device to close or not open preventing unauthorized access thereto. The construction of a panel door with interlocked and overlapping panels which move from a position under and to the front of the bowl and in closing moves above the bowl and towards the rear of the feeder in order to isolate the food from nonauthorized pets in a safe manner. Further, the door system is driven by a gear drive system where the door panels incorporate gear teeth such that they are driven directly and controlled by logic where the system can react to the possibility that a pet or other item is preventing the closing of the door that the control system will sense the restriction and react to it by pausing and if needed reverse somewhat before resuming. This action will repeat as long as a pet attempts to limit the doors closing. In conjunction with the direction of closure and the control logic, the door will close in a safe way eventually overcoming the pet's attempt to keep the door open with the pace of the system and its continuous efforts not allowing the pet to remove food from the food bowl.

In one embodiment of the present invention, a system is provided for controlling pet access to locations or objects. The system includes a location or object to be controlled, a means for preventing pet access to said location or object and a sensor system configured and arranged to selectively disengage the means for preventing pet access. The sensor system may include at least one tag or a means to identify the pets through the use of other frequency-based identification such as visual light which could be captured as a digital image. In operation, the system compares the received signal to a pre-programmed group of signals reduced to digital information which may be either authorized or nonauthorized. Comparison of the received information to the pre-stored information provides authorization to access or not to access the location or object.

It should be noted by one skilled in the art that while the technology of the present invention is presented most generally as a system for controlling pet access to locations or objects and that the invention is illustrated in the context of several preferred embodiments, such disclosure is meant only to be illustrative and is not intended to limit the scope of this invention to a particular configuration. It is also intended within the scope of the present invention that the system disclosed herein can be applied equally for controlling access to litter boxes, pet watering systems (including circulating and outside of the house non-circulating), pet toys, pet crates, pet gate access, pet doors, pet beds and pet containment systems. Accordingly, the general scope of the system are directed to the access control system and not to a specific embodiment. This provides a broad range of pet products that are improved in the context of the of the present invention.

Turning now to Fig. 1, the system of the present invention is specifically illustrated in the context of a pet feeder dish 10. The feeder dish 10 can be seen to include a housing 12 with a base portion 14 that includes a compartment 16 therein and electronics 18 for controlling the overall system. One or more sensors 20 can also be seen on the face of this base portion 14. The sensors 20 may also not be visible and operate, for the identification of either tagged and non-tagged animals or children. Preferably, the sensors 20 function using RF, ultrasonic, infrared or visible light technology to identify if there are animal(s) in close proximity to the feeder. In addition, electronic controls 18 are shown that include programming capability that may include a user interface including but not limited to buttons, switches and/or a liquid crystal display (LCD) A second compartment 22 can be seen on top of and extending upwardly from the base portion 14. The second compartment 22 is optionally provided as a food storage region so that rather than operate as a single feeding device, the feeder 10 can be operated on a controlled basis by dispensing food over a number of days without needing to be refilled. Additionally, a means for controlling access to the food compartment can be seen in the form of a door 24. The door 24, as will be described in greater detail below, serves as a means to restrict and control access to the food contained within the compartment 16 in the housing 12.

An exploded view of the pet feeder 10 can be seen at Fig. 2. In this figure the housing 12 can be seen to enclose a removable dish 26 within the compartment 16. Further, the second upper compartment 22 can also be seen to be removable thereby allowing easy removal and cleaning of these components as they directly contact and house the pet food. Further, the housing 12 encloses a dispensing assembly 28 that is formed with the compartment 16. This dispensing assembly 28 is shown to be formed as a single unit with the compartment to facilitate manufacturing resources and costs although both assemblies may be made separate and apart from one another which would facilitate food delivery system cleaning.

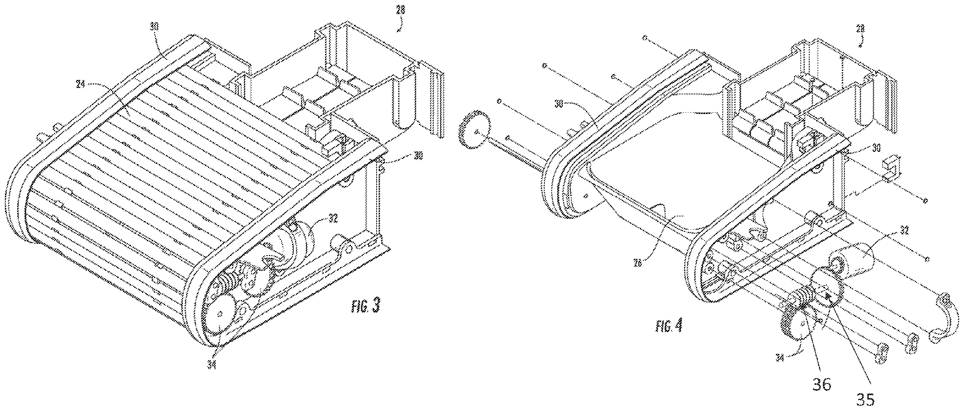

Figs. 3 and 4 provide a detailed illustration of the dispensing assembly 28 and the means for controlling access to the compartment containing the food dish 2 6. The door 24 is shown as being retractable and is preferably a segmented type door that allows it to slide freely within a track 30. This arrangement allows easy opening and closing of the door 24. Such operation is controlled by various motor 32 and gear 34 arrangements as are well known in the art.

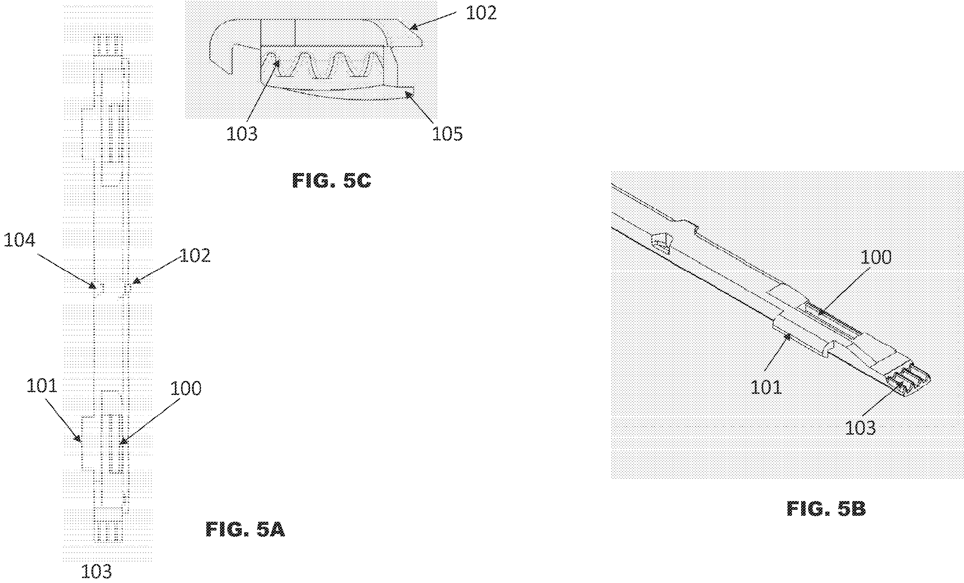

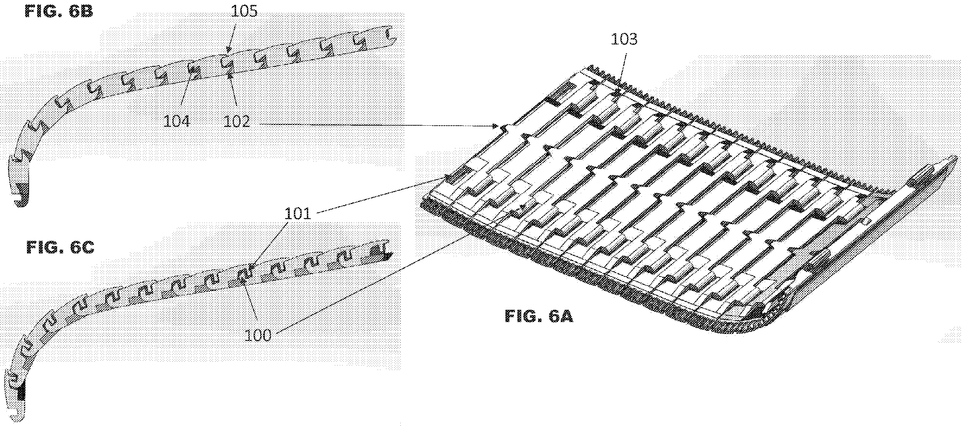

Turning to Figs. 5a, 5b, and 5c, a single door panel is shown to include interlocking 100 and 101 that connect one door panel to the next when placed in axial arrangement as shown in Figs. 6a, 6b and 6c. The door assembly 24 is then formed from the door panels which are guided in channel 30, Figs. 3 and 4, created by the bowl supporting structure. Once installed the assembly of door panels maintains its form through the interlocking features 100 and 101 and the guide channel 30. In an alternative embodiment the panels could be snapped together forming a true hinge joint at the snap. Once configured as a group of panels in the guide channel, the door assembly cannot be pushed together or pulled apart as a result of the interlocked features 100 and 101. This structure also allows the assembly to be driven around a radius allowing the door to turn a corner much the same way as a garage door system does allowing the door to present a full closure and yet move into an unused space when the food door is open. In this embodiment that unused space is fully under the food bowl.

The door panel arrangement further includes Interlocking features 102, 104, and 105 as seen in which provide locking features that do not allow vertical movement between door panels while held in axial relation to one another. Further the upper feature 105 spans the full width of the door panel and covers over the adjacent door panel so that there is no accessible gap between the door panels. This structure keeps pet claws from being able to get caught between the panels resulting in a safe structure. Further the overlap may project towards the front of the feeder so that a pet's natural orientation of clawing at the door to open it will not have any surface to grab onto.

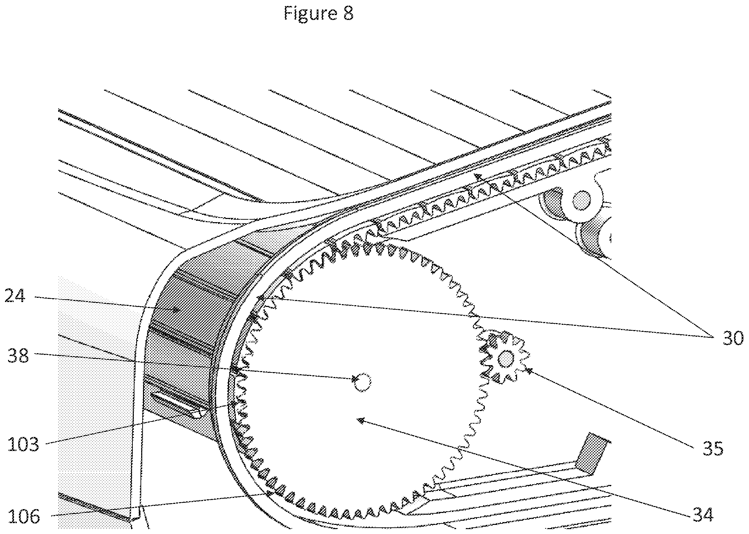

Fig. 8 shows the interaction of the main drive gear 34 and the meshing of the teeth 106 with the corresponding teeth 103 in the door as the door is driven in the channel 30. This system allows a very small structure surrounding the food bowl maximizing space utilization and enabling the desired pet safe door motion. The result is an embodiment that requires only a door panel structure to build an entire door assembly resulting in an improved low-cost door system.

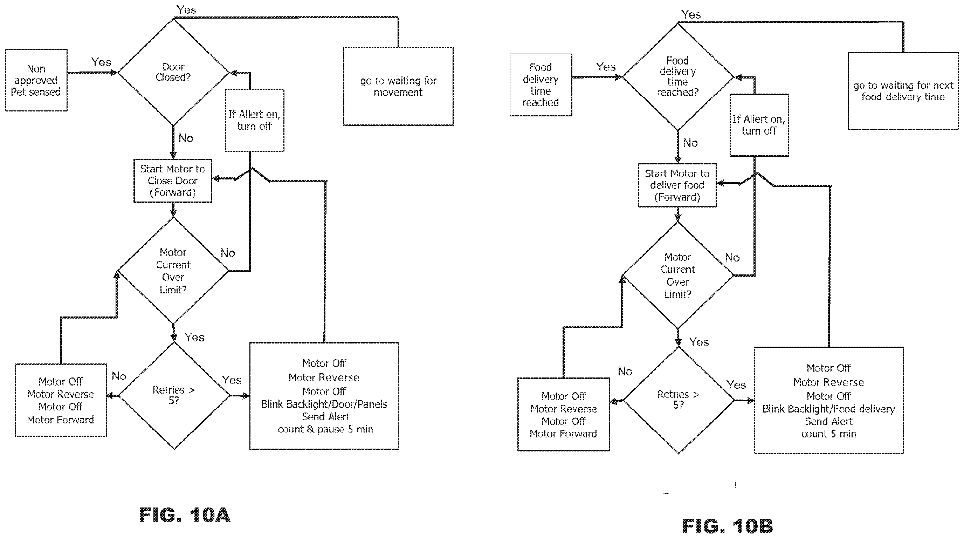

A notable feature of the operation of the means for controlling access is that the operation is controlled in such a way as to prevent a pet from being trapped yet also closes the door in the event the pet is trying to prevent the closing action. Fig. 10 provides a flow chart detailing the logic for that controls the door system such that if a pet gets caught by the door or tries to stop the door 24 from closing, the system will sense the increased current draw by the motor. When a pre-established current threshold flowing to the DC motor driving the door gear system is exceeded the system will stop the door closing and either pause or reverse briefly and then quickly resume closing. Pause and reverse times are typically less than 1 second and ideally around ~ second. Should the pet continue to try to stop the door, this process will repeat until full closure is reached. In this way the door will close, but will not pinch a paw in the decreasing gap that results in the food opening as the door closes will pause to release the pet yet still try to close in a manner that urges the pet away from the compartment. Further, in this particular arrangement the door 24 slides from the lower front of the device to the upper rear of the device in a manner that nudges the pets head or paw(s) out of the food dish 26.

This control arrangement is also used in case there is an obstruction or build-up of debris causing the door not to close. In this instance the door will utilize the same stop, reverse, and resume closing logic with the exception that since the feeder, through its sensors, knows there is no pet causing the issue it will repeat this process 5 times. If the door is not successfully closed within the 5 tries, as identified by a position micro switch or other means, then the feeder will pause the door closing efforts and blink warning alerts on the LCD as well as send out an alert via the internet to a web connect device running the feeder monitoring application to inform the pet owner of the door issue. Further, the feeder will initiate a 5-minute timer which when counted down completely the feeder will try again to complete the door closure. This action will happen for up to 5 tries at which point it will wait for action by the owner. Should this action overcome the cause of the door restriction then the feeder will resume normal operation stop the LCD blinking and in the case of the internet enable feeder the feeder will send an alert notifying the owner that the issue is resolved.

As seen in Fig. 8 the door panels are operatively connected to the drive system similar to a linear gear drive system with the improvement that instead of a solid linear gear mounted to a moving system, the gear teeth are formed into the door panel ends. The gears used are standard spur gears 34, 35 and the door has one at either end connected by a torque carrying shaft 38. One side is driven by power from a motor with a gear 35 on its output shaft. These gears drive the door driving gear 34. The drive gears 34 teeth 106 interface with gear teeth integrally moulded into the door panels 103. It is also noted that the motor drive gear system may comprise other types of gears for example worm gears 36 (Fig. 4), helical, or other. The door panel spacing defined by the Interlocking geometry is defined in order to result in the tooth spacing of the assembly to exactly (or close) match the gear tooth spacing on the drive gears where the door wraps around the drive gear. In the current embodiment, the drive gear 34 is located where the door changes direction to go from on the top of the food bowl to curl under the food bowl. In this way there is no requirement to push or pull the door through the higher load portion of the track. During this change of direction of the track, the door teeth and drive gear teeth are meshed defining their location. Therefore, in the highest load portion of the track, there is no load on the door interconnections 100, 101 which allows them to be relatively light in structure yet be functionally strong. This novel door requires few parts, is low in cost and has high strength for low material usage. In addition, it has a very small form factor. It can be repeated in any orientation and size can be scaled to fit the needs of the product.

The food dispensing assembly 28 as seen at Figs. 2 and 3 is operative to transport food from the food storage compartment 22 to the food dish 26 based on commands issued by the controls 18. The timing and frequency of this dispensing operation will be covered in more detail below. The same logic, Fig. 10b, used for door not closing is employed to make sure any food debris or pile ups in the feed system that may cause it lo overload and stop are resolved as well. Should food become lodged such that it does not want to be delivered to the bowl the same current rise system will sense this undesired situation and stop/reverse/resume the food delivery system in order to clear the obstruction. Although the food system is relatively clear of features that may cause an issue, it is critical that the pet be fed the proper portion of food therefore a food jam must be minimized and overcome should one occur. The reversing process may be increased to up to 3 seconds in order to reorient the food and therefore clear the obstruction. As in the door system this clearing cycle will be repeated up to 5 times and then should that not be sufficient the feeder will wait up to 5 minutes and then try again repeating that up to 5 times before alerting the pet owner. The same type of alerting methods with LCD flashing and internet application messages are included as part of this system as well. During the food delivery process any pause or reversal time, as well as time required to return to the prior position does not affect the delivered quantity of food as that time is accounted for in the food delivery system by hating the food delivery counter during any of this activity or in another environment adding time back into the delivery program during a jam.

A further aspect of the present invention is also related to the importance of delivering the right amount of the right food to the right feeder. Existing product attempts to deliver a specific amount of food to 1 or more animals have failed to do so in large part because the food is delivered from a storage location to the bowl through some form of a channel. That channel often stores a portion of food within it. Hungry pets can be aggressive in their desire to have more food than they may be allotted for a given meal or day. The pets will often attempt to get more food by bumping or hitting the feeder and or reach their paws up the feed channel to release additional food even if it is only 1 kibble at a time. Once they learn they can do this they will work continuously to get additional food out of the feeder and thereby increase the amount of food eaten daily. Therefore, an aspect of this invention includes a food channel door with a position sensor integrated into it and control logic to lock out pets attempting to get additional food.

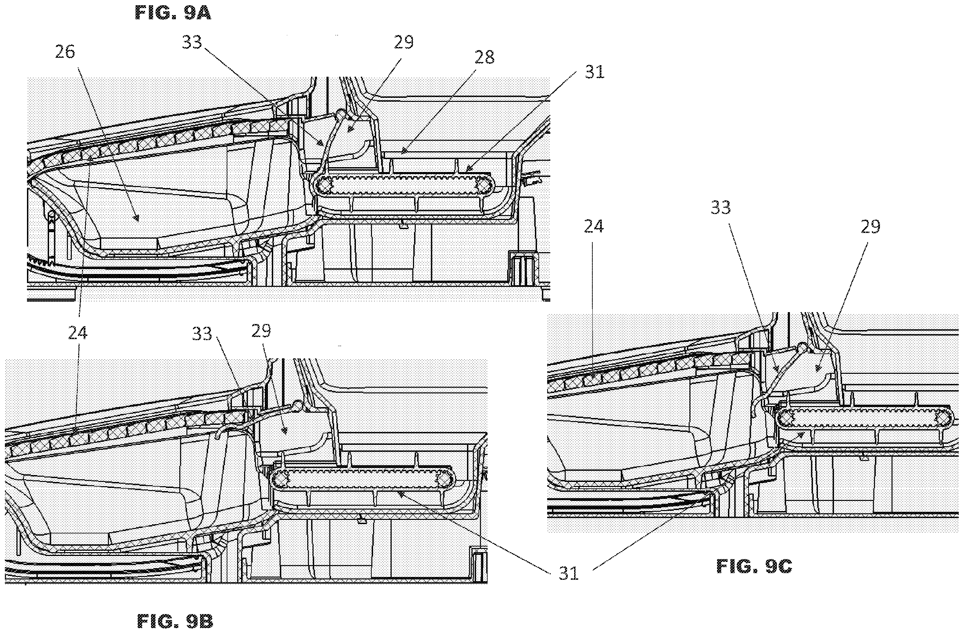

Turning to Figs. 9a, b, and c, the food delivery system 28 has a door 33 at the juncture from the food delivery channel 29 and the food bowl 26 portion of the feeder. The door 33 is preferably spring biased closed. In operation, the food being delivered pushes this door 33 open against the urging of the spring. As the door 33 position changes a sensor such as a rotary potentiometer detects the motion and by correlating the sensor reading to the mechanical door 33, the door position is known as well as if it is opening or closing. The primary function of this system is to prevent a pet that is approved for feeding, from eating all the food that has been delivered and attempting to circumvent the system to obtain more. The food channel door 33 covers the food delivery channel 29 so in order for the pet to get more food it must lift the door to reach the food still in the feed channel 29. When the door 33 is lifted the sensor makes the system aware of this action and causes the main bowl covering door 24 to close locking out the pet from eating any more food. In the preferred embodiment the food covering door 24 will remain closed until the next meal is delivered.

An additional function is to monitor the food amount being delivered, and in the bowl, so that the feeder can alert the pet owner if the pet is not eating the target amount of food. When the feeder is in operation if the pet is not eating all the food being delivered by the programmed feeder or the family has gone away and left the feeder running, the food bowl 26 may fill completely full with food. When this happens the door 33 will be held fully open by the food. In this situation the feeder will not deliver the next meal and will alert the pet owner through LCD flashing and or internet delivered alerts a notification of the overfilled bowl. Additionally, if the door is open at the start of any pre-set food delivery time, the food amount delivered may or may not be modified for that specific feeding. Repetitive times with the door open some amount between feedings indicates the pet is not eating each meal fully and the system may again alert the owner through LCD flashing and or internet delivered alerts to the system application. In some modes of operation, the feeder may self-adjust to reduce delivered food per meal in small steps until the amount of food eaten matches the amount of food delivered over the course of several meals. There are several operational modes that can be taken based on this door position sensing because it is located at the back of the food bowl and the food is pushed in from the feed channel the door position has a direct correlation to the amount of food in the bowl. This information can be used to modify the food delivery program for individual or successive feedings.

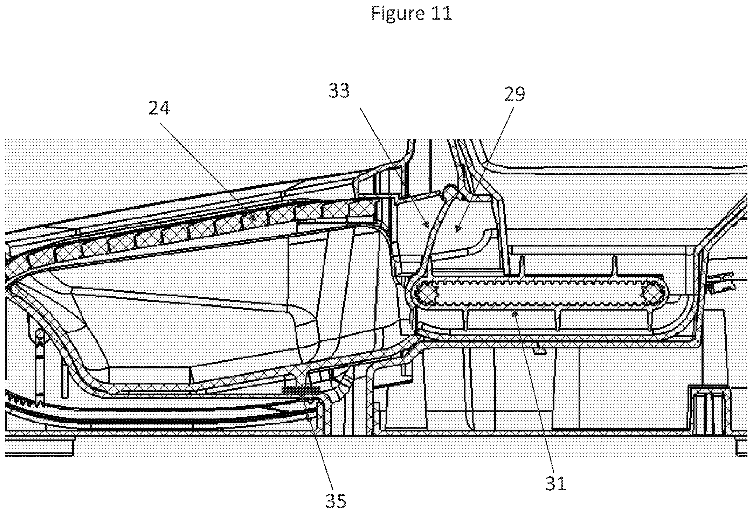

In a still further aspect shown at Fig. 11, a load sensing device 35 such as a pressure sensor or a load cell is located relatively under the food bowl. Through measurement of pressure or displacement the amount of food in the bowl can be determined as the weight of the bowl is known. This system can then feedback to the food delivery system to allow for many options of feeding pets as the accuracy in delivering small portions of food can be more easily achieved. In addition, the feeder control system can completely monitor when and how much food was delivered and when and how much 1 or more known pets ate during a day and over a period of time. This information may be tied to a weight loss plan and the feeder can be programmed to reduce daily food delivery according to either pet owner settings, or pre-programmed weight loss protocols. In a still further embodiment this data can be evaluated in the feeders control system or remotely through an internet connection and both pet owners and the registered veterinarian for the pet can be notified.

Returning now to Fig. 3, the door 24 is shown in a closed position thereby covering the food dish 26, making it inaccessible to either animals or small children. Optionally, an override switch may be provided that is used by the owner to open the feeder for bowl filling and removal for cleaning.

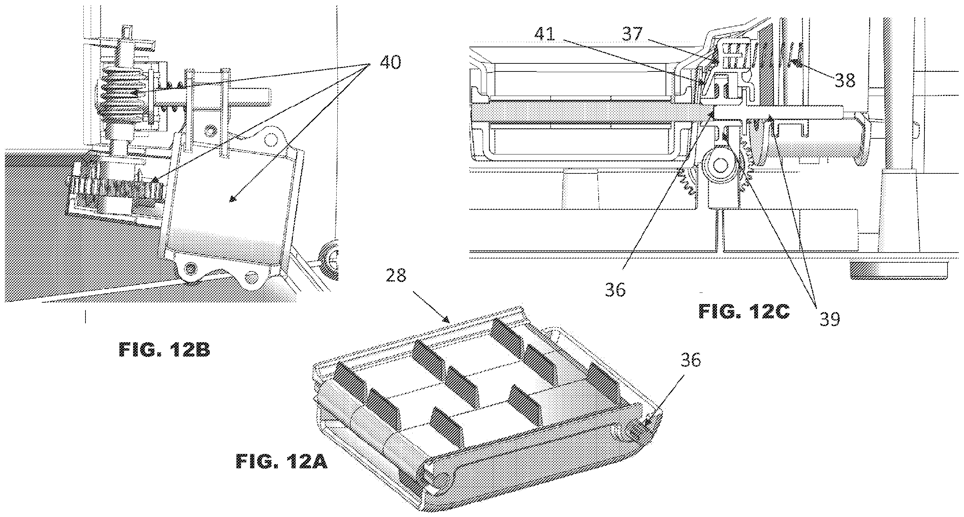

As seen in Figs. 12a, b, and c, the food delivery structure 28 can be a separate system that is removable for cleaning. The food delivery system is powered by a de motor 40 and gear drive system 40 and is coupled to the food delivery system through a torque delivering system utilizing a splined structure on the food delivery drive shaft 36. The drive feature 36 may be disengaged when removing the food delivery module 28 by actuating a release button 37 which is acted on by a spring 38 which keeps the gear train drive shaft 39 engaged to the food delivery drive shaft end 36. When the button 37 is depressed the gear train drive shaft 39 is moved out of engagement allowing the food delivery module to be removed. The structure of the button 37 has a cam surface 41 which upon insertion of the food delivery module 28 the drive shaft 36 urges the cam surface 41 of the button 37 to depress. Once past the cam surface the spring 38 urges the gear drive shaft 39 into engagement with the food module drive shaft end 36 and the system is ready to deliver food again.

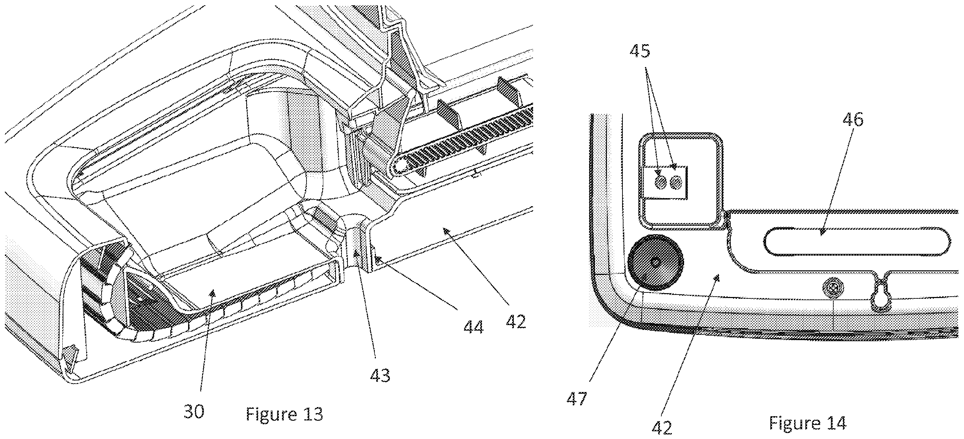

In yet another aspect of the present invention as seen in Fig. 13 the bowl supporting structure has a contoured opening 43 that projects through a mating opening 44 in the feeder bottom 42. With this structure the food bowl area can be more easily cleaned as debris, cleaning chemicals, and water can pass through the base of the product eliminating the more difficult aspect of pulling debris up and out of the recessed food bowl region.

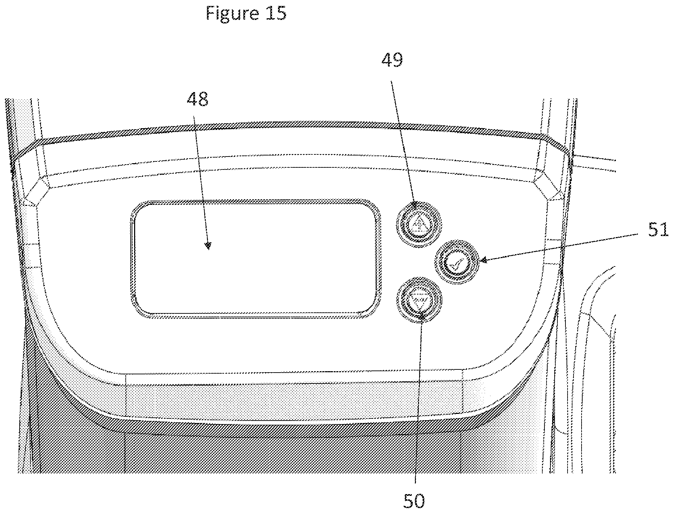

Fig. 15 shows yet another aspect of the present invention. The pet feeder reduces the complex operational requirements to a simple user interface so that the pet owner can more easily program the feeder for the needs of the family pets. Current feeders even when they are just basic timed feeders can be complex to program and often take several pages of a user manual to properly set up the feeder. Whether the feeder is set up using buttons 49, 50, 51 and an LCD screen 48 on the product or the touch screen LCD on a phone, tablet, or computer (not shown) the number of steps to program and their complexity must be simple as many pet owners are may not be very technical.

In the present invention the feeder shows the 12:00am upon starting, time setting is the accomplished using traditional up/down buttons 49, 50 for hours and minutes with an enter button 51 when the correct time is reached. Once entered, the system automatically jumps to the next step, which is how much food which is desired per day and is entered in 1/4 or 1/8 cup intervals. The system comes pre-set at 1 cup minimizing the number of pushes needed since 1 cup is a typical amount for a cat or small dog. Larger feeder for large dogs would be only 1/4 cup increments and pre-set to 2 cups. Again, using the up/down buttons 49, 50 the daily amount of food is selected and the enter button 51 pushed the feeder then requests how many meals the pet owner desires. Again since 2 is common for dogs that is the pre-set number select up or down to change the amount from 1 to 8 meals per day and press enter. If the owner selects 3 or less meals per day, then the feeder knows this is a dog. More than 3 meals selected, and the feeder knows this is for a cat. After pressing the enter button 51 the feeder requests when the 1st meal of the day should be and it is pre-set at 6:00am since morning is typical time for the 1st meal, so again number of changes to get to a preferred time is minimized by using a logical pre-set. Again, time is set using the up 49 down 50 and enter 51 buttons, same as setting the current time. The feeder now knows everything it needs to know and so it sets itself up. The feeder divides the total amount of food per day by the number of meals and delivers that amount per meal. Further the feeder then sets all meal times. If the meals are 3 or less, it divides the meals into 12-hour day and sets each subsequent meal either 6 hours later (for 3 meals) or 12 hours later for 2 meals and makes sure the feedings are all daytime feedings, so the dog can be walked after a meal. For 4 or more meals, this indicates a cat which should be fed many small meals throughout the day, so the feedings are divided into a 24-hour day. Therefore, for example, for 6 meals and 1. 5 cups the feeder will deliver 1/4 cup every 4 hours around the clock. In this way setting up the feeder is simple and fast while also pre-setting intelligent feeding plan for each day. The last step is assigning the specific pet to the feeder, which in the case of the RFID tag happens just by bringing the tag into feeder proximity for the first time Digital signature systems require presenting the pet to the feeder.

In another aspect of the invention, Figure 14 shows where the invention has 2 power jacks 45 on the lower surface of the feeder base 42. These are mounted at an angle to the floor to make it more difficult to pull out the power cord should a pet push the feeder around. Often pets are fed in the kitchen and in many kitchens there are limited power outlets at floor level, therefore, the presence of the second power jack 45 allows one feeder to be plugged into the wall at one power jack 45 and the second power jack 45 can be used in conjunction with a two male connector power cord accessory to power a second feeder without requiring the availability of a second wall plug. Further since the system is powered from a low voltage DC input from the wall plug which is a common electrical component. The power could be supplied by a separate battery based that is plugged into the same power jack 45. The separate battery power supply may be integrated to match and sit under the feeder or may be separately located. The battery system may be a custom or may be an adapter connector that connects to an already available battery power source such as those available for cordless power tools. This would include a mating plug for the feeder, a connecting cord, and an adapter to fit the currently available battery structure and contact location.

In yet another aspect of the feeder has resilient feet that may be designed with a concave bottom surface in order to act as a suction cup on certain smooth floors in order to resist the pet's attempts to move the product. The feeder electronic controls further include a tilt sensor that will monitor that the feeder is upright such that should a pet knock the feeder over the tilt sensor will alert the pet owner through the internet app connection as well as flashing the buttons and LCD.

In a still further aspect of the present invention, the product has been designed with a backup battery power supply. This battery backup only comes into play when the unit loses power. There are two modes for which this system works. Mode 1 initiates if the pet owner turns off the product and then unplugs it, or the house loses power when the product is off or paused, then the product will store and retain all the settings that have been programmed into the product, if any. This aspect also allows the feeder to be pre-programmed at the factory or veterinarian's office and then supplied to the pet owner who then only needs to plug it in and place the tag on the targeted pets collar. Mode 2 initiates if the product is running and power is lost. In this situation the feeder keeps all system information while the power is out. In addition, when the power resumes, the feeder automatically resumes as if the power were never lost. If the power is out during a pre-programmed food delivery time, the feeder may be programmed to either deliver the missed meal when power is restored, or not deliver food for that particular time. It will deliver food at the next food delivery time as programmed. In this way since most power outages that the pet owner may not be aware of do not interrupt the proper operation of the feeder. Longer power outages that may be a hardship for any pets should they not be fed are often well known by the pet owner and the owner will take care of the pet until power resumes. In an alternative embodiment the backup battery has sufficient capacity to deliver the food during a power outage. In a still further embodiment the backup battery is rechargeable and never goes dead, because it is kept charged while the feeder is plugged in.

Where basic feeder operation is based on ongoing fixed food amount entered at the start of operation, the feeder also has the option to run more complex food delivery protocols such as automated weight loss protocols. It is anticipated that at least 2 weight loss modes are preferred, slow and fast weight loss. In these modes of operation, the feeder would deliver the pre-set food for a period time at which point it would reduce the amount, 1-10% for slow weight reduction, or 10-25% for a rapid results mode. The feeder would then deliver this for a period of time allowing the pet(s) to get used to the reduced level for 1-4 weeks or more and then reduce by the chosen pre-set amount and hold again for 1-4 weeks, and repeat until a pre-set maximum reduction is achieved perhaps 30-50% total reduction achieved over several months at which point the feeder maintains that level of food and delivers the final reduced amount indefinitely or until the feeder is reprogrammed by the pet owner. An alternative control protocol for sensitive pet(s) / families may cause the feeder to lower the food amount 1-3% or more per week until the maximum level has been reached. This type of feeder control is critical as it is well known that although pets may need to lose weight, pets on a diet may start to act out (begging, eating anything they can find, etc.) and that pet owners may intervene and supplement the limited food with other calories such as treats or table scraps. Should this happen the system will fail to deliver the reduced calories and little to no weight will be lost. Therefore, it is desirable that the weight loss be steady allowing the pet(s) to adjust vs act out while also enough that the pet owner can see the weight loss progress expected. Further having the feeder do the reduction automatically removes the anxiety from the owner to have to periodically reduce the food level themselves which they may be leery of doing as can be seen that the pet was given more calories than its breed, size, and activity level required resulting in the weight gain that must now be reversed.

In a further operating mode, the feeder can be programmed to correct what is known as binge eating where some pets, especially cats, desire to eat drives them to consume too much food in short periods of time. Unfortunately, when pets do this, they often regurgitate the food in a very short period of time. The preferred embodiment having a door that is controlled from an open to closed position and back as a function of its programming may also have a programmed routine that allows the proper pet to have the food exposed (door open) when they approach to eat. Once open for normally eating pets the door remains open until the pet leaves at its own timing. In the case of pets that "binge" eat, the feeder has an operating mode that may be set by the pet owner where the door remains open for a limited period of time. The base time frame is fixed, and may be between 1- 3 minutes, during which time the pet can eat the food in the exposed bowl. After the time has expired, the food covering door will close and remain closed for a period of not less than 20 minutes. Twenty minutes is enough time for a typical pet's stomach to begin processing the limited amount of food ingested such that regurgitating is less likely. The pet can then eat more food, which is again time-limited, followed by 20-minute lock out which may continue until the delivered food at that meal is eaten. In this way pets with binge eating disorders are managed in such a way that the pet can retain the food it has eaten, improving its health and keeping the pet owner's property clean of regurgitated piles of food.

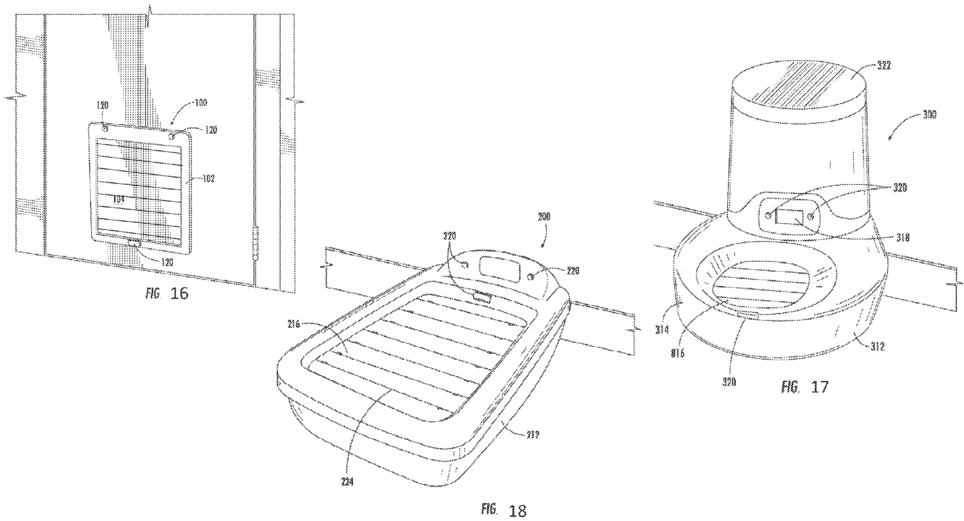

Turning now to Fig. 16, an alternate embodiment is provided that depicts the teachings of the present invention in the context of a pet access door 100. The pet door 100 includes a frame 102 that is configured to be installed into an opening in a door or wall. A door 104 is provided within the frame 102 and serves as the means for preventing access. The door 104 is displaceable by structure and control logic as noted above to an open position when the sensor(s) 120 detects the presence of said at least one authorized or nonauthorized animal. Sensors would be the same as those disclosed in the Feeder and may be visible as shown or not.

In still a further embodiment, Fig. 17 depicts the teachings of the present invention in the context of a pet watering device 300. Much in the same manner as described above, with respect to the feeder, the pet watering device 300 includes a housing 312 with a base portion 314 that includes a compartment 316 therein and electronics 318 for controlling the overall system. One or more sensors 320 can also be seen on the face of this base portion 314. In addition, controls are shown that include programming capability that may include a user interface including but not limited to buttons, switches and/or a liquid crystal display (LCD) A second compartment 322 can be seen on top of and extending upwardly from the base portion 314. The second compartment 322 is provided as water reservoir region. Additionally, a means for controlling access to the water compartment 316 can be seen in the form of a door 816. The door 816 moves between an open and closed position when sensor (s) 320 detects the presence of said at least one authorized or non-authorized animal. Sensors would be the same as those disclosed in the Feeder and may be visible as shown or not. The door structure and control options as defined above can be applied and used in conjunction with known methods of water filtration.

Fig. 18 depicts another alternate embodiment in the context of a litter box 200. The litter box 200 also has a housing 212 with a compartment 216 therein. In this case the compartment 216 is a litter compartment. The means for preventing access is a door 224 that moves between an open and closed position when said sensor(s) 220 detects the presence of said at least one authorized or nonauthorized animal. Sensors would be the same as those disclosed in the Feeder and may be visible as shown or not.

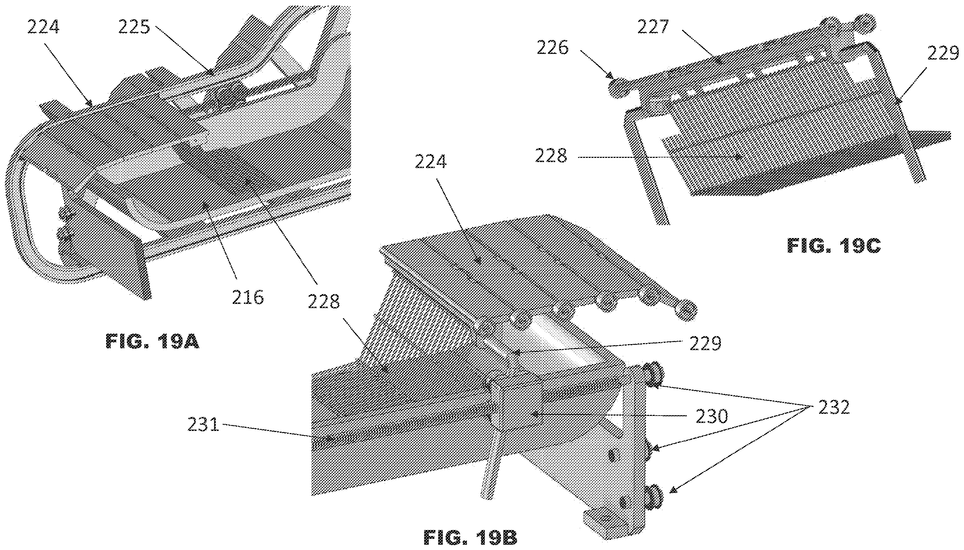

Figs. 19a, 19b, and 19c depict an embodiment of the inside structure of a litter box where the door assembly 224 moves on rollers 226 along a guide track 225. The door assembly includes a door panel 227 which has a waste cleaning rake 228 structurally attached to it. Additionally, the door panel 227 has a mechanical link 229 structurally attached to it which engages the door motion control drive train. The drive train consists of the engaging structure, shown as a drive nut with rollers mechanically attached thereto 230, which is designed to interact with the link 229 such that as the drive nut 230 moves from one end of the litter box to the other under the rotational urging of a lead screw 231. The lead screw is coupled to a drive train that can be of many options such as gears or pulleys attached to a rotational motor. It is also understood that the door motion system can be connected to and driven by several configurations well known to those skilled in the art of mechanical systems. The disclosed embodiment results in a structure where the door cover and waste rake can be operated together and from a single drive system. This results in a lower cost system. The operational controls of the door rake system can be controlled incorporating the restriction sensing and reacting protocols as defined above in the feeder embodiment.

Further it is an aspect of this invention that the rake can be mounted to the door such that it can be rotated up and out of contact with the litter. This is important allowing the rake to glide over the top of the litter on the reverse action when the door is opening reducing loading on the system. Further the rake may be lifted up and retained above the litter at specific times to allow the door to move forward without engaging the cleaning function as there are times when the cover should close quickly yet the soiled litter should be given several minutes for it to properly set up before scooping the clumps. This is accomplished by an additional reverse function which backs the rake up further lifting it out of the litter and engaging a simple latch (not shown) which holds it up until getting to the fully closed end at which point a protrusion engages the latch releasing the rake to be in contact with the litter upon opening and ready to engage the litter on the next forward action of the door. In an alternative embodiment the rake position can be controlled by a mechanical or electromechanical driven system.

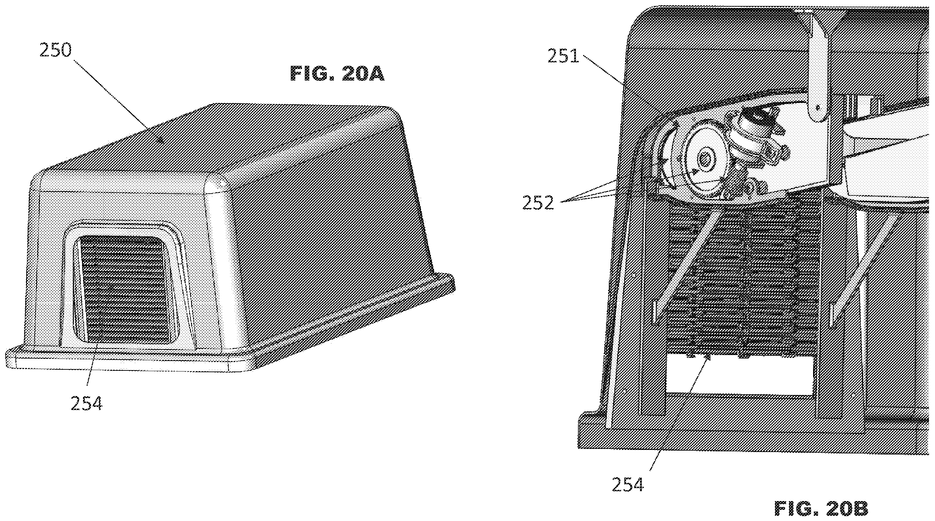

Figs. 20a and 20b depict another alternate embodiment of a litter box where the litter box has a separate cover 250. The litter box not shown, used in conjunction with the cover 250 creates a compartment therein. In this case the compartment is a litter compartment. The means for preventing access is a door 254 that moves between an open and closed position when said sensor(s) detects the presence of said at least one authorized or non-authorized animal. The segmented and interlocking door 254 moves in a supporting guide track structure 251 under the urging of the motor and gear train arrangement 252.

It can therefore be seen that the present invention provides several improved systems that aid in the execution of selective control and access to various locations and objects such as pet related items like feeders, litter boxes, pet watering systems including circulating and outside of the house non circulating, pet toys, pet crate and gate access, pet doors, pet beds, and pet containment systems in a relatively less complex and cost-effective in regard to its use and operation. For these reasons, the present invention is believed to represent a significant advancement in the art, which has substantial commercial merit.

While there is shown and described herein certain specific structure embodying the invention, it will be manifest to those skilled in the art that various modifications and rearrangements of the parts may be made within the scope of the appended claims.

## Claims

1. A system for controlling pet access to a pet system (10) having an interior compartment (16), said system comprising:
said interior compartment (16) within the pet system (100) to be controlled; and
a segmented door structure (24) that opens and closes to control pet access to said interior compartment (16),
wherein said segmented door structure (24) resides inside the pet system (10) when access to said interior compartment (16) is permitted and , wherein said door structure (24) travels in opposing guide channels (30) positioned at opposite ends of the segmented door structure (24) and, wherein said segmented door structure (24) is formed from a plurality of door panels that are interconnected to one another by interfitting mating formations (100, 101, 102, 104, 105);
**characterised in that**:
the interfitting mating formations (100, 101, 102, 104, 105) comprise a first (100), second (101), third (102), fourth (104), and fifth (105) interlocking feature; and
each door panel includes the first (100), second (101), third (102), fourth (104), and fifth (105) interlocking feature, wherein the fifth interlocking feature (105) spans a full width of the door panel to cover over an adjacent one of the door panels so that there is no accessible gap between adjacent door panels;
wherein the first interlocking feature (100) of one door panel connects to the second interlocking feature (101) of another door panel when the one door panel and the another door panel are placed in axial arrangement, such that , as a result of the connection of the first interlocking feature (100) of the one door panel to the second interlocking feature of the another door panel (101), the resulting door structure (24) cannot be pushed together or pulled apart ; and
wherein the third (102), fourth (104) and fifth (105) interlocking features do not allow vertical movement between door panels while the door panels are held in axial relation to one another.

2. The system of claim 1, wherein said pet system (10) is selected from the group consisting of: pet feeders, pet toys, pet doors, pet gates, pet crates, litter boxes and pet watering systems.

3. The system of claim 1, wherein said plurality of door panels each have structural elements (103) configured to engage with a door drive system at least at one end thereof.

4. The system of claim 3, wherein said structural elements comprise gear tooth structures (103).

5. The system of claim 1, wherein the plurality of door panels each overlap with one another such that no line of sight path exists between segments.

6. The system of claim 1, wherein the opposing channels (30) define a path around a radius along which said segmented door structure (24) travels such that the segmented door system (24) does not travel in a single straight line or single arc.

7. The system of claim 1, wherein operation of said segmented door (24) opening or closing is paused momentarily and subsequently resumed should resistance to operation cause a rise in operational current in a motor (32) controlling movement of said segmented door (24).

8. The system of claim 7, wherein said pausing and resuming operation is repeated at least one time.

9. The system of claim 8, wherein said pausing and resuming operation is stopped after a predetermined number of attempts for a period of time and then resumed.

10. The system of claim 7, wherein an alert is sent to a connected device over a radio frequency system should said door opening and closing be paused.

11. The system of claim 1, wherein the operation of said segmented door (24) opening or closing is paused momentarily, reversed and subsequently resumed should resistance to operation cause a rise in operational current in a motor (32) controlling movement of said segmented door (24).

12. The system of claim 11, wherein said pausing, reversing, and resuming operation is repeated at least one time.

13. The system of claim 12, wherein said pausing, reversing, and resuming operation is stopped after a predetermined number of attempts for a period of time and then resumed.

## Patentansprüche

1. System zum Steuern eines Haustierzugangs zu einem Haustiersystem (10), das ein inneres Fach (16) aufweist, das System umfassend:
das innere Fach (16) innerhalb des Haustiersystems (100), das gesteuert werden soll; und
eine segmentierte Türstruktur (24), die öffnet und schließt, um einen Zugang von Haustieren zu dem Inneren Fach (16) zu steuern,
wobei die segmentierte Türstruktur (24) sich innerhalb des Haustiersystems (10) befindet, wenn ein Zugang zu dem inneren Fach (16) erlaubt ist, und wobei sich die Türstruktur (24) in gegenüberliegenden Führungskanälen (30) bewegt, die an gegenüberliegenden Enden der segmentierten Türstruktur (24) positioniert sind, und wobei die segmentierte Türstruktur (24) aus mehreren Türpaneelen gebildet ist, die durch ineinandergefügte zusammenpassende Ausbildungen (100, 101, 102, 104, 105) untereinander verbunden sind;
**dadurch gekennzeichnet, dass**:
die ineinandergefügten zusammenpassenden Ausbildungen (100, 101, 102, 104, 105) ein erstes (100), zweites (101), drittes (102), viertes (104) und fünftes (105) Verriegelungsmerkmal umfassen; und
jedes Türpaneel das erste (100), zweite (101), dritte (102), vierte (104) und fünfte (105) Verriegelungsmerkmal beinhaltet, wobei das fünfte Verriegelungsmerkmal (105) eine volle Breite des Türpaneels überspannt, um ein benachbartes der Türpaneele abzudecken, sodass es keine zugängliche Lücke zwischen benachbarten Türpaneelen gibt;
wobei das erste Verriegelungsmerkmal (100) eines Türpaneels mit dem zweiten Verriegelungsmerkmal (101) eines anderen Türpaneels verbunden ist, wenn das eine Türpaneel und das andere Türpaneel in axialer Anordnung angeordnet sind, derart, dass als Resultat der Verbindung von dem ersten Verriegelungsmerkmal (100) des einen Türpaneels mit dem zweiten Verriegelungsmerkmal des anderen Türpaneels (101) die resultierende Türstruktur (24) nicht zusammengedrückt oder auseinandergezogen werden kann; und
wobei das dritte (102), vierte (104) und fünfte (105) Verriegelungsmerkmal keine vertikale Bewegung zwischen Türpaneelen zulässt, während die Türpaneele in axialer Beziehung zueinander gehalten werden.

2. System nach Anspruch 1, wobei das Haustiersystem (10) ausgewählt ist aus der Gruppe, die aus Haustiernahrungszufuhren, Haustierspielzeug, Haustiertüren, Haustiertoren, Haustierkästen, Katzentoiletten und Haustier-Wasserzufuhrsystemen besteht.

3. System nach Anspruch 1, wobei die mehreren Türpaneele jeweils Strukturelemente (103) aufweisen, die konfiguriert sind, um ein Türantriebssystem an mindestens einem Ende davon einzugreifen.

4. System nach Anspruch 3, wobei die Strukturelemente Zahnradstrukturen (103) umfassen.

5. System nach Anspruch 1, wobei die mehreren Türpaneele einander überlappen, derart, dass es zwischen Segmenten keine sichtbare Linie gibt.

6. System nach Anspruch 1, wobei die gegenüberliegenden Kanäle (30) einen Pfad um einen Radius definieren, entlang dem sich die segmentierte Türstruktur (24) bewegt, derart, dass sich das segmentierte Türsystem (24) nicht in einer einzelnen Geraden oder einem einzelnen Bogen bewegt.

7. System nach Anspruch 1, wobei ein Betrieb eines Öffnens oder Schließens der segmentierten Tür (24) pausiert und dann wieder aufgenommen wird, wenn ein Betriebswiderstand einen Anstieg des Betriebsstroms in einem Motor (32) verursacht, der eine Bewegung der segmentierten Tür (24) steuert.

8. System nach Anspruch 7, wobei der Vorgang eines Pausierens und Fortsetzens mindestens einmal wiederholt wird.

9. System nach Anspruch 8, wobei der Vorgang eines Pausierens und Fortsetzens nach einer vorbestimmten Anzahl von Versuchen über einen Zeitraum gestoppt und dann fortgesetzt wird.

10. System nach Anspruch 7, wobei eine Warnung über ein Hochfrequenzsystem an eine verbundene Vorrichtung gesendet wird, wenn das Öffnen und Schließen der Tür pausiert wird.

11. System nach Anspruch 1, wobei der Betrieb eines Öffnens oder Schließens der segmentierten Tür (24) pausiert, umgekehrt und dann wieder aufgenommen wird, wenn ein Betriebswiderstand einen Anstieg des Betriebsstroms in einem Motor (32) verursacht, der eine Bewegung der segmentierten Tür (24) steuert.

12. System nach Anspruch 11, wobei der Vorgang eines Pausierens, Umkehrens und Fortsetzens mindestens einmal wiederholt wird.

13. System nach Anspruch 12, wobei der Vorgang eines Pausierens, Umkehrens und Fortsetzens nach einer vorbestimmten Anzahl von Versuchen über einen Zeitraum angehalten und dann fortgesetzt wird.

## Revendications

1. Système de commande d'accès d'un animal de compagnie à un système pour animal de compagnie (10) ayant un compartiment intérieur (16), ledit système comprenant :
ledit compartiment intérieur (16) à l'intérieur du système pour animal de compagnie (100) à commander ; et
une structure de porte segmentée (24) qui s'ouvre et se ferme pour commander l'accès d'un animal de compagnie audit compartiment intérieur (16),
dans lequel ladite structure de porte segmentée (24) réside à l'intérieur du système pour animal de compagnie (10) lorsque l'accès audit compartiment intérieur (16) est autorisé et, dans lequel ladite structure de porte (24) se déplace dans des canaux de guidage opposés (30) positionnés aux extrémités opposées de la structure de porte segmentée (24) et, ladite structure de porte segmentée (24) étant formée à partir d'une pluralité de panneaux de porte qui sont interconnectés les uns aux autres par des formations de couplage mutuel (100, 101, 102, 104, 105) ;
**caractérisé en ce que** :
les formations de couplage mutuel (100, 101, 102, 104, 105) comprennent une première (100), une deuxième (101), une troisième (102), une quatrième (104) et une cinquième (105) caractéristique d'interverrouillage ; et
chaque panneau de porte comporte la première (100), la deuxième (101), la troisième (102), la quatrième (104) et la cinquième (105) caractéristique d'interverrouillage, la cinquième caractéristique d'interverrouillage (105) s'étendant sur toute la largeur du panneau de porte pour couvrir un panneau adjacent des panneaux de porte de telle sorte qu'il n'y a aucun espace accessible entre les panneaux de porte adjacents ;
dans lequel le premier élément d'interverrouillage (100) d'un panneau de porte se connecte au deuxième élément d'interverrouillage (101) d'un autre panneau de porte lorsque le premier panneau de porte et l'autre panneau de porte sont disposés en agencement axial, de telle sorte que, en raison de la liaison, du premier élément d'interverrouillage (100) d'un panneau de porte au deuxième élément de verrouillage de l'autre panneau de porte (101), la structure de porte résultante (24) ne peut pas être poussée ensemble ou écartée ; et
dans lequel les troisième (102), quatrième (104) et cinquième (105) éléments d'interverrouillage ne permettent pas un mouvement vertical entre les panneaux de porte tandis que les panneaux de porte sont maintenus en relation axiale l'un par rapport à l'autre.

2. Système selon la revendication 1, dans lequel ledit système pour animal de compagnie (10) est choisi dans le groupe constitué de : mangeoires pour animal de compagnie, jouets pour animal de compagnie, chatières pour animal de compagnie, barrières pour animal de compagnie, caisses pour animal de compagnie, bacs à litière et systèmes d'abreuvage pour animal de compagnie.

3. Système selon la revendication 1, dans lequel ladite pluralité de panneaux de porte ont chacun des éléments structurels (103) conçus pour se mettre en prise avec un système d'entraînement de porte au moins à une extrémité de celui-ci.

4. Système selon la revendication 3, dans lequel lesdits éléments structurels comprennent des structures de dents d'engrenage (103).

5. Système selon la revendication 1, dans lequel la pluralité de panneaux de porte se chevauchent chacun de telle sorte qu'aucune ligne de trajet de vue n'existe entre les segments.

6. Système selon la revendication 1, dans lequel les canaux opposés (30) définissent un trajet autour d'un rayon le long duquel ladite structure de porte segmentée (24) se déplace de telle sorte que le système de porte segmentée (24) ne se déplace pas en une seule ligne droite ou en un seul arc.

7. Système selon la revendication 1, dans lequel le fonctionnement de l'ouverture ou de la fermeture de ladite porte segmentée (24) est momentanément interrompu puis repris si la résistance au fonctionnement provoque une augmentation du courant de fonctionnement dans un moteur (32) commandant le mouvement de ladite porte segmentée (24).

8. Système selon la revendication 7, dans lequel ladite opération de pause et de reprise est répétée au moins une fois.

9. Système selon la revendication 8, dans lequel ladite opération de pause et de reprise est arrêtée après un nombre prédéterminé de tentatives pendant une période de temps puis est reprise.

10. Système selon la revendication 7, dans lequel une alerte est envoyée à un dispositif connecté sur un système de fréquence radioélectrique si lesdites ouverture et fermeture de porte sont interrompues.

11. Système selon la revendication 1, dans lequel le fonctionnement de l'ouverture ou de la fermeture de ladite porte segmentée (24) est momentanément mis en pause, inversé et ensuite repris si la résistance au fonctionnement provoque une augmentation du courant de fonctionnement dans un moteur (32) commandant le mouvement de ladite porte segmentée (24).

12. Système selon la revendication 11, dans lequel ladite opération de pause, d'inversion et de reprise est répétée au moins une fois.

13. Système selon la revendication 12, dans lequel ladite opération de pause, d'inversion et de reprise est arrêtée après un nombre prédéterminé de tentatives pendant une période de temps puis est reprise.
